# EUROPEAN PATENT APPLICATION

(11) **EP 4 503 835 A1**
(43) Date of publication of application: **05.02.2025**
(21) Application number: 22934046.8
(22) Date of filing: 29.03.2022
(51) Int. Cl.: H04W 76/10

(54) **METHOD FOR PROCESSING EXTENDED REALITY MULTIMEDIA XRM SERVICE AND APPARATUS THEREOF**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Stöckeler, Ferdinand
(86) International application number: PCT/CN2022/083866
(87) International publication number: WO 2023/184191

(57) **Abstract**

An embodiment of the present disclosure discloses a method for processing a extended reality multimedia (XRM) service and an apparatus thereof, which may be applied to the technical field of communications. The method executed by a network exposure function (NEF) comprises: receiving a request message sent by an application function (AF), wherein the request message carries XRM service information; and updating the information of the XRM in a unified data register (UDR) according to subscription information corresponding to the XRM service information and the XRM service information. Hence, after receiving the XRM service information sent by the AF, the NEF may update the information of the XRM in the UDR according to the service information and the subscription information corresponding to the XRM service information so that same is executed by a PCF or RAN. Therefore, the collaboration of access and mobility related requirements among a plurality of terminal devices corresponding to an XRM service group is achieved, and the collaboration of the QoS and transmission strategy of an XRM service data stream is thus ensured.

## Description

### TECHNICAL FIELD

The present disclosure relates to the technical field of communication, in particular to a method for processing an extended reality multimedia (XRM) service and an apparatus thereof.

### BACKGROUND

Extended reality multimedia (XRM) services, such as virtual reality (VR), augmented reality (XR) and other XRM services, a video-based machine or unmanned aerial vehicle remote control service, involve multi-modal data traffic. Data traffic in multi-modal data often have some or even strong correlation with each other, such as synchronization of audio and video traffic, synchronization of tactile and visual, etc. There are some common features in the data traffic of such media services themselves, between the data traffic, and the need for network transmission of the data traffic of these services, and effective identification and utilization of these features may be conducive to network and service transmission, control, as well as to service provisioning and user experience.

The XRM service requires a 5th Generation Mobile Communication Technology System (5GS) to comprehensively consider Quality of Service (QoS) characteristics of data traffic related to the service, such as a delay critical, a Guaranteed Bit Rate (GBR), a Guaranteed Flow Bit Rate (GFBR), a Packet Delay Budget (PDB) and a Default Maximum Data Burst Volume (MDBV) and other parameters can be simultaneously satisfied and cooperatively consistent. Particularly, for an XRM service involving a plurality of terminals, consistency guarantee of QoS authorization and execution among the plurality of terminals is considered.

For the plurality of terminals of the XRM service, management and coordination of access and mobility related requirements is a premise to guarantee the coordination of the QoS and a transmission policy of the XRM service data traffic.

### SUMMARY

Embodiments of the present disclosure provides a method for processing an extended reality multimedia (XRM) service and an apparatus thereof, which can be applied in a field of communication technology.

In a first aspect, an embodiment of the present disclosure provides a method for processing an extended reality multimedia service (XRM), the method being performed by a network exposure function (NEF), and the method including: receiving a request message sent by an application function (AF), in which the request message carries XRM service information; and updating information of an XRM in a unified data repository (UDR) according to subscription information corresponding to the XRM service information and the XRM service information.

In the present disclosure, after receiving the XRM service information sent by the AF, the NEF may update the information of the XRM in the UDR according to the XRM service information and the subscription information corresponding to the XRM service information, for execution by a PCF or a RAN. Therefore, the coordination of access and mobility related requirements among a plurality of terminals corresponding to an XRM service group is achieved, and the coordination of the QoS and the transmission policy of XRM service data traffic is thus ensured.

In a second aspect, an embodiment of the present disclosure provides another method for processing an extended reality multimedia (XRM) service, the method being performed by an application function (AF) and including: sending a request message to a network exposure function (NEF), in which the request message carries XRM service information.

In the present disclosure, by sending the XRM service information to the NEF, the AF enables the NEF to update the UDR information or send the XRM service information to the PCF according to needs. Therefore, the coordination of access and mobility related requirements among a plurality of terminals associated with an XRM service group is achieved, and the coordination of the QoS and the transmission policy of XRM service data traffic is thus ensured.

In a third aspect, an embodiment of the present disclosure provides another method for processing an extended reality multimedia (XRM) service, the method being performed by a policy control function (PCF), and the method including: receiving XRM service information associated with a terminal; generating a quality of service (Qos) rule and/or a terminal access and routing policy according to the XRM service information; and sending the Qos rule and/or the terminal access and routing policy to the terminal.

In the present disclosure, after acquiring the XRM service information, the PCF can execute corresponding authorization, and decision-making and updating of the measurement and the rule according to the XRM service information, and the PCF can send the generated Qos rule and/or the terminal access and routing policy to the terminal. Therefore, the coordination of the Qos rule and/or the terminal access and routing policy among the terminals associated with the XRM service can be achieved, and the coordination of the QoS and the transmission policy of XRM service data traffic is thus ensured.

In a fourth aspect, an embodiment of the present disclosure provides another method for processing an extended reality multimedia (XRM) service, the method being performed by a terminal and including: receiving a quality of service (Qos) rule and/or a terminal access and routing policy sent by a policy control function (PCF), in which the Qos rule and/or the terminal access and routing policy is generated based on XRM service information; and executing the Qos rule and/or the terminal access and routing policy.

In the present disclosure, after receiving the Qos rule and/or the terminal access and routing policy generated based on the XRM service information, the terminal can perform access and communication transmission based on the Qos rule and/or the terminal access and routing policy. Therefore, the coordination of the Qos rule and/or the terminal access and routing policy among the terminals associated with the XRM service can be achieved, and the coordination of the QoS and the transmission policy of XRM service data traffic is thus ensured.

In a fifth aspect, an embodiment of the present disclosure provides a communication device configured at a network exposure function (NEF) side, the communication device including:
a transceiving module configured to receive a request message sent by an application function (AF), in which the request message carries XRM service information; and
a processing module configured to update information of an XRM in a unified data repository (UDR) according to subscription information corresponding to the XRM service information and the XRM service information.

In a sixth aspect, an embodiment of the present disclosure provides a communication device configured at an application function (AF) side, the communication device including:
a transceiving module configured to send a request message to a network exposure function (NEF), in which the request message carries XRM service information.

In a seventh aspect, an embodiment of the present disclosure provides a communication device configured at a policy control function (PCF) side, the communication device including:
a transceiving module configured to receive XRM service information associated with a terminal;
a processing module configured to generate a Qos rule and/or a terminal access and routing policy according to the XRM service information;
in which, the transceiving module is further configured to send the Qos rule and/or the terminal access and routing policy to the terminal.

In an eighth aspect, an embodiment of the present disclosure provides a communication device configured at a terminal side, the communication device including:
a transceiving module configured to receive a quality of service Qos rule and/or a terminal access and routing policy sent by a policy control function (PCF); and
a processing module configured to execute the Qos rule and/or the terminal access and routing policy.

In a ninth aspect, an embodiment of the present disclosure provides a communication device including a processor and a memory having a computer program stored therein. The processor executes the computer program stored by the memory to cause the communication device to execute the method of the embodiments of the first aspect described above, or to execute the method of the embodiments of the second aspect described above, or to execute the method of the embodiments of the third aspect described above, or to execute the method of the embodiments of the fourth aspect described above.

In a tenth aspect, an embodiment of the present disclosure provides a system for processing an extended reality multimedia (XRM) service, the system including the communication device of the embodiments of the fourth aspect, the communication device of the embodiments of the fifth aspect, the communication device of the embodiments of the sixth aspect, or the communication device of the embodiments of the seventh aspect.

In an eleventh aspect, an embodiment of the present disclosure provides a computer-readable storage medium storing instructions for used by the terminal. When the instructions are executed, the NEF is caused to execute the method of the embodiments of the first aspect, or the AF is caused to execute the method of the embodiments of the second aspect, or the PCF is caused to execute the method of the embodiments of the third aspect, or the terminal is caused to execute the method of the embodiments of the fourth aspect.

### BRIEF DESCRIPTION OF THE DRAWINGS

To illustrate technical solutions in embodiments of the present disclosure or the background more clearly, the following description will be made to the accompanying drawings, which may be used in embodiments of the present disclosure or the background.
FIG. 1 is a schematic architectural diagram of a communication system according to an embodiment of the present disclosure;
FIG. 2 is a flow chart of a method for processing an extended reality multimedia (XRM) service according to an embodiment of the present disclosure;
FIG. 3 is a flow chart of a method for processing an extended reality multimedia (XRM) service according to an embodiment of the present disclosure;
FIG. 4 is a flow chart of a method for processing an extended reality multimedia (XRM) service according to an embodiment of the present disclosure;
FIG. 5 is a flow chart of a method for processing an extended reality multimedia (XRM) service according to an embodiment of the present disclosure;
FIG. 6 is a flow chart of a method for processing an extended reality multimedia (XRM) service according to an embodiment of the present disclosure;
FIG. 7 is a flow chart of a method for processing an extended reality multimedia (XRM) service according to an embodiment of the present disclosure;
FIG. 8 is a flow chart of a method for processing an extended reality multimedia (XRM) service according to an embodiment of the present disclosure;
FIG. 9 is a flow chart of a method for processing an extended reality multimedia (XRM) service according to an embodiment of the present disclosure;
FIG. 10 is a flow chart of a method for processing an extended reality multimedia (XRM) service according to an embodiment of the present disclosure;
FIG. 11 is a flow chart of a method for processing an extended reality multimedia (XRM) service according to an embodiment of the present disclosure;
FIG. 11a is a flow chart of a method for processing an extended reality multimedia (XRM) service according to an embodiment of the present disclosure;
FIG. 12 is an interactive schematic diagram of a method for processing an extended reality multimedia (XRM) service according to an embodiment of the present disclosure;
FIG. 13 is a structural schematic diagram of a communication device according to an embodiment of the present disclosure;
FIG. 14 is a structural schematic diagram of a communication device according to an embodiment of the present disclosure; and
FIG. 15 is a structural schematic diagram of a chip according to an embodiment of the present disclosure.

### DETAILED DESCRIPTION

Reference will now be made in detail to exemplary embodiments, examples of which are illustrated in the accompanying drawings. When the following description refers to the accompanying drawings, the same numerals in different drawings indicate the same or similar elements, unless otherwise indicated. Implementations described in the following exemplary embodiments do not represent all embodiments consistent with the present disclosure. Rather, they are merely examples of apparatuses and methods consistent with certain aspects of the present disclosure as illustrated in the appended claims.

To facilitate understanding, terminologies referred to in the present disclosure are first introduced.

### 1. Access and mobility management function (AMF)

An AMF is a logical node functional network element at a core network side, which is a control plane access point for a terminal and a wireless core network, receiving all information related to connections and sessions from a user equipment, and performing registration, connection, reachability and mobility management. In addition, the AMF provides a session management message transmission channel for the terminal and a session management function (SMF), and provides identification and authentication functions when a user accesses.

### 2. Radio access network (RAN)

An RAN is an implementation of the wireless access technology. It exists between a device (e.g., a mobile phone, a computer, or any remotely controlled machine) and a Core Network (CN), providing a communication connection between the two.

### 3. Policy control function (PCF)

A PCF is another functional network element at the core network side, which can support a unified policy framework to manage network behaviors, provide a policy rule to a network entity to implement execution, and access subscription information of a unified data repository (UDR).

### 4. Network exposure function (NEF)

A NEF is a further functional network element at the core network side. A network element of 3gpp exposes its capability to other network elements through the NEF. The NEF stores the relevant information into a unified data repository (UDR), and can also read the relevant information from the UDR. The NEF can only access a UDR of the same public land mobile network (PLMN) as the NEF. The NEF provides a corresponding security guarantee to ensure the security of an external application to a 3gpp network, and the conversion between relevant information inside and outside the 3gpp, such as the conversion of an application function (AF) service identification and a data network name (DNN) inside a 5G core network, and network slice selection assistance information (S-NSSAI), etc. Especially, network and user sensitive information must be hidden for external network elements. The NEF can obtain relevant information about other network elements by accessing the NDR, and the NEF can only access the UDR of the same PLMN as the NEF.

### 5. Unified data repository (UDR)

A UDR is another functional network element at the core network side, which can be configured for a unified data management (UDM) to store subscription data or read the subscription data. The PCF stores policy data or reads the policy data, and stores exposed data or reads the exposed data. The UDR and a network function (NF) accessing the UDR have the same PLMN, i.e., under the same network. That is, a service interface (Nudr) provided by the UDR is an internal interface of the PLMN.

### 6. Application function (AF)

The AF is a another functional network element at the core network side, which can interact with a 3GPP core network to provide a service, and supports the following functions: influence of an application side on service traffic routing; accessing the network exposure function; exchanging with a policy framework for policy control; an operator-trusted application function directly interacting with an relevant network function based on an operator's deployment. For an application function that the operator does not allow direct access to the network function, an external capability exposure function (NEF) may be used to interact with the relevant network function via the NEF.

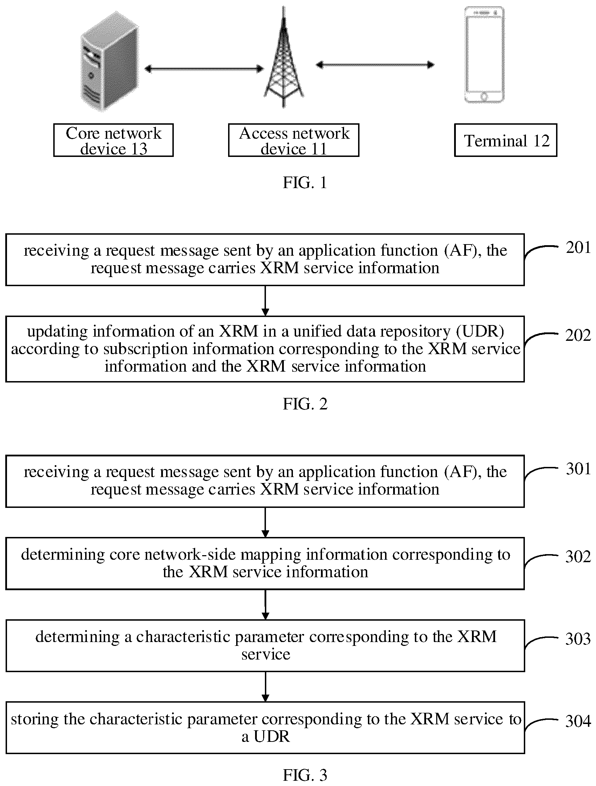

Referring to FIG. 1, FIG. 1 is a schematic architectural diagram of a communication system according to an embodiment of the present disclosure. The communication system may include, but is not limited to, one network device and one terminal, and the number and form of devices shown in FIG. 1 are merely examples and do not constitute a limitation on embodiments of the present disclosure. In practical application, two or more network devices and two or more terminals may be included. The communication system shown in FIG. 1 includes an access network device 11, a terminal 12, and a core network device 13.

It should be noted that technical solutions of embodiments of the present disclosure can be applied to various communication systems, such as a long-term evolution (LTE) system, a 5th generation (5G) mobile communication system, a 5G new radio (NR) system, or other future new mobile communication systems, etc.

The access network device 11 in embodiments of the present disclosure is an entity on a network side for transmitting or receiving signals. For example, the access network device 11 may be an evolved NodeB (eNB), a transmission reception point (TRP), a next generation NodeB (gNB) in an NR system, a base station in other future mobile communication systems or an access node in a wireless fidelity (WiFi) system, etc. Embodiments of the present disclosure are not limited as to the specific technology and specific device modalities employed by the access network device. The access network device 11 according to embodiments of the present disclosure may be composed of a central unit (CU) and distributed units (DUs), in which the CU may be referred to as a control unit, and a protocol layer of a network device, such as a base station, may be split using a CU-DU structure, and parts of functions of the protocol layer are placed in the CU for centralized control, and some or all of the remaining part of the functions of the protocol layer are distributed in the DU, and the DU is controlled centrally by the CU.

The terminal 12 in embodiments of the present disclosure is an entity on a user side for receiving or transmitting signals, such as a cellphone. The terminal may also be referred to as a terminal device, a user equipment (UE), a mobile station (MS), a mobile terminal (MT), etc. The terminal can be an automobile with a communication function, a smart automobile, a mobile phone, a wearable device, a Pad, a computer with a wireless transceiving function, a virtual reality (VR) terminal, an augmented reality (AR) terminal, a wireless terminal in industrial control, and a wireless terminal in self-driving; a wireless terminal in remote medical surgery, a wireless terminal in a smart grid, a wireless terminal in transportation safety, a wireless terminal in smart city, a wireless terminal at smart home, etc. Embodiments of the present disclosure are not limited to the specific techniques and specific device modalities employed by the terminal.

It can be understood that the communication system described in embodiments of the present disclosure is for the purpose of describing the technical solutions of embodiments of the present disclosure more clearly, and does not constitute a limitation on the technical solutions provided by embodiments of the present disclosure, and it can be seen by those skilled in the art that the technical solutions provided by embodiments of the present disclosure are also applicable to similar technical problems as the system architecture evolves and new service scenarios appear.

In the present disclosure, an XRM service requires a 5GS system to comprehensively consider QoS characteristics of data traffic related to the service, for example, whether parameters such as data traffic, a Guaranteed Flow Bit Rate (GFBR), a Packet Delay Budget (PDB) and a Default Maximum Data Burst Volume (MDBV), etc. can be satisfied at the same time and can be cooperated and consistent, and especially for an XRM service involving a plurality of terminals, considering consistency guarantee of QoS authorization and execution among the plurality of terminals.

For the plurality of terminals of the XRM service, management and coordination of access and mobility related requirements is a premise to guarantee the coordination of the QoS and a transmission policy of the XRM service data traffic, such as an consistency and change coordination of an index to radio access type provided to the RAN by the AMF among the plurality of terminals and/or a Frequency Selection Priority (RFSP) index, and how service area restrictions are cooperated. The PCF can modify the service area restrictions at any time based on a change of an operator policy or an authorization tracking area ID (TAI) to guarantee real-time coordination without conflict.

To achieve the above-mentioned objects, in the present disclosure, the function of a NEF is enhanced, which supports providing an XRM service-related application requirement from an AF, such as a service specific parameter of a terminal or a plurality of terminals for an XRM service. QoS policy decision and/or policy coordination is supported. The AF is supported to subscript and report a QoS policy delivery result or a QoS change of XRM data traffic of a terminal associated to the XRM service. The PCF is supported to perform the policy and QoS coordination among a plurality of PCFs corresponding to terminals of an XRM service group. This can support the XRM service requirements of the plurality of terminals with packet data unit sessions in the network, and in particular enables policy and QoS coordination among the plurality of PCFs corresponding to terminals of the XRM service group.

Since the data traffic corresponding to the XRM service is generally multi-modal data traffic, the XRM service in the present disclosure may also be referred to as a multi-modal data traffic business, or a multi-modal data traffic service, etc., which is not limited in the present disclosure.

A method for processing an extended reality multimedia (XRM) service and an apparatus thereof as provided in the present disclosure will be described in detail referring to the accompanying drawings. In the following embodiments of the present disclosure, it is taken as an example that some or all terminals associated with the XRM service or the multi-modal data service are registered to a network, and a PCF is selected, to complete an access management (AM) session association. The PCF can request a change notification of subscription information related to an XRM service or a multi-modal data service from a UDM according to a policy and a QoS requirement of the XRM service.

Referring to FIG. 2, FIG. 2 is a flow chart of a method for processing an extended reality multimedia (XRM) service according to an embodiment of the present disclosure, the method being performed by an NEF. As shown in FIG. 2, the method can include, but is not limited to, the following steps.

In step 201, a request message sent by an application function (AF) is received, and the request message carries XRM service information.

Alternatively, the NEF may receive the request message sent by the AF through a service interface NNEF_XRM Service Parameter service provided by the NEF.

Alternatively, the XRM service information includes at least one of: an XRM service identification, an XRM service group identification, or a specific parameter of the XRM service or a multi-modal data service provided by an AF to a terminal associated with the XRM service.

The XRM service identification can be any identification information which can uniquely determine an XRM service. The XRM service group identification may be configured to identify each terminal associated with the XRM service.

Alternatively, the AF provides a specific parameter for the terminal associated with the XRM service, and can provide a specific parameter of a multi-modal data service corresponding to the XRM service, which is not limited in the present disclosure.

Alternatively, the terminal associated with the XRM service may be one or more, and the specific parameter of the XRM service or the multi-modal data service provided by the AF for the one or more terminals may include at least one of: a service description, a service parameter, a terminal identification, a terminal group identification, and a subscription to event.

The service description can be configured to identify an XRM service or an XRM data Service.

It can be identified by a combination of a data network name (DNN) and network slice selection assistance information (S-NSSAI), or by an XRM identification (ID). Or, it is represented by an AF service identification or an external application identification.

The service parameter is information about an AF guideline determined by a policy and QoS that associate with an XRM service or a multi-modal data service, such as a list of rules that associate with an XRM service or multiple data services application traffic, parameters such as a terminal policy, a Group ID, a combination of a DNN and S-NSSAI, or a selection priority of a corresponding rule, e.g., an alternative QoS parameter priority, a corresponding location or time window priority, or a routing selection priority, etc.

The subscription to event is a notification about an outcome of a session management (SM) policy that the AF may subscribe to (the AF may subscribe to notification about the outcome of the SM policy), or an implementation and a change of an access management (AM) policy or a UE Policy.

Alternatively, subscription data of a plurality of terminals associated with the XRM service may be associated via the XRM service identification. Data of the plurality of terminals in an XRM service group is consistent. For example, service QoS of the plurality of terminals are consistent, and characteristic parameters of access and data routing of the plurality of terminals are consistent.

In step 202, information of an XRM in a unified data repository (UDR) is updated according to subscription information corresponding to the XRM service information and the XRM service information.

In the present disclosure, after receiving the request message sent by the AF, the NEF can determine whether to authorize the request according to the XRM service information. If it determines to authorize the request, the information corresponding to the XRM in the UDR can be updated according to the subscription information corresponding to the XRM service information and the XRM service information. For example, a characteristic parameter of the XRM is updated for the RAN or the PCF to execute, to realize policy and QoS coordination among a plurality of PCFs respectively corresponding to the plurality of terminals corresponding to the XRM service group. Therefore, the coordination of access and mobility related requirements among the plurality of terminals associated with the XRM service group is achieved, and the coordination of the QoS and a transmission policy of XRM service data traffic is thus ensured.

In the present disclosure, after receiving the XRM service information sent by the AF, the NEF may update the information of the XRM in the UDR according to the XRM service information and the subscription information corresponding to the XRM service information for execution by the PCF or the RAN. Therefore, the coordination of access and mobility related requirements among the plurality of terminals corresponding to the XRM service group is achieved, and the coordination of the QoS and the transmission policy of the XRM service data traffic is thus ensured.

Referring to FIG. 3, FIG. 3 is a flow chart of a method for processing an extended reality multimedia (XRM) service according to an embodiment of the present disclosure, the method being performed by an NEF. As shown in FIG. 3, the method can include, but is not limited to, the following steps.

In step 301, a request message sent by an application function (AF) is received, and the request message carries XRM service information.

A specific implementation of the above-mentioned step 301 can be referred to the detailed description of any embodiment of the present disclosure, and will not be described in detail herein.

In step 302, core network mapping information corresponding to the XRM service information is determined.

Alternatively, the NEF can determine an XRM service identification or a multi-modal data service identification, a corresponding data network name (DNN) and network slice selection assistance information (S-NSSAI). The NEF can determine a data network name (DNN) and network slice selection assistance information (S-NSSAI) corresponding to the multi-modal data service identification. The NEF can determine an external application identification, i.e., a core network (core network, CN) application identification corresponding to the XRM service identification, and the external application identification is configured to identify the XRM service. The NEF can determine a terminal identification in a CN corresponding to the terminal identification according to subscription information corresponding to the XRM service. The NEF can determine an XRM service group identification in a CN corresponding to the XRM service group identification according to the subscription information corresponding to the XRM service The NEF can acquire the subscription information corresponding to the XRM service from the UDM.

In step 303, a characteristic parameter corresponding to the XRM service is determined.

Alternatively, the NEF can determine the characteristic parameter corresponding to the XRM service according to the subscription information corresponding to the XRM service.

Alternatively, the NEF can also refine the corresponding service characteristic parameter according to its local configuration.

In step 304, the characteristic parameter corresponding to the XRM service I stored to a UDR.

Alternatively, the NEF may store the characteristic parameter as a service characteristic parameter of application data.

In the present disclosure, after determining the characteristic parameter corresponding to the XRM service, the NEF can store the characteristic parameter to the UDR, and thus a network element device, i.e., a consumer, such as an AF, a PCF, an SMF or an AMF can acquire, through a subscribing to events trigger, the characteristic parameter corresponding to the XRM service reported by the UDR, and then determine a corresponding policy and QoS. Therefore, the coordination of access and mobility related requirements among a plurality of terminals associated with an XRM service group is achieved, and the coordination of the QoS and the transmission policy of XRM service data traffic is thus ensured.

In the present disclosure, after receiving the XRM service information sent by the AF, the NEF can determine the characteristic parameter corresponding to the XRM service according to the service information and the subscription information corresponding to the XRM service information, and then store the characteristic parameter to the UDR for a consumer to use. Therefore, the coordination of access and mobility related requirements among a plurality of terminals associated with an XRM service group is achieved, and the coordination of the QoS and the transmission policy of XRM service data traffic is thus ensured.

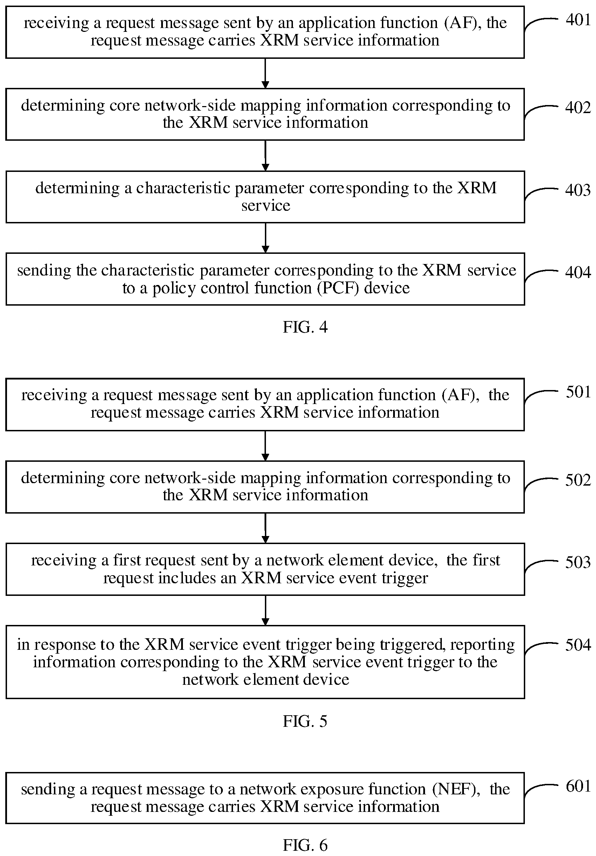

Referring to FIG. 4, FIG. 4 is another flow chart of a method for processing an extended reality multimedia (XRM) service according to an embodiment of the present disclosure, the method being performed by a NEF. As shown in FIG. 4, the method can include, but is not limited to, the following steps.

In step 401, a request message sent by an application function (AF) is received, and the request message carries XRM service information.

In step 402, core network mapping information corresponding to the XRM service information is determined.

In step 403, a characteristic parameter corresponding to the XRM service is determined.

The specific implementation of the above-mentioned steps 401 to 403 can be referred to the detailed description of any embodiment of the present disclosure, and will not be described in detail herein.

In step 404, the characteristic parameter corresponding to the XRM service is sent to a policy control function (PCF).

In the present disclosure, after the NEF sends the characteristic parameter corresponding to the XRM service to the PCF, the PCF can execute response authorization, and a decision-making or updating of the measurement and the rule. Alternatively, the PCF may store corresponding information to the UDF according to an authorization result.

Alternatively, the XRM service is associated with a plurality of terminals, and the plurality of terminals may have selected a plurality of PCFs respectively, then the XRM service group associated with the NEF may also be associated with the plurality of PCFs, and thus the NEF may send the characteristic parameter to the plurality of PCFs. Thus, each PCF can perform corresponding authorization, decision-making or updating of the policy and rule, to enable the coordination of policy and QoS among various PCFs. Therefore, the coordination of access and mobility-related requirements among the plurality of terminals associated with the XRM service group is achieved, and the coordination of the XRM service data traffic QoS and transmission policy is thus ensured.

In the present disclosure, after receiving the XRM service information sent by the AF, the NEF can perform information mapping, and according to subscription information corresponding to the service information and the XRM service information, determines characteristic parameters corresponding to the XRM service, and then sends the characteristic parameter to the PCF. Therefore, the coordination of access and mobility related requirements among a plurality of terminals associated with an XRM service group is achieved, and the coordination of the QoS and the transmission policy of XRM service data traffic is thus ensured.

Referring to FIG. 5, FIG. 5 is another flow chart of a method for processing an extended reality multimedia (XRM) service according to an embodiment of the present disclosure, the method being performed by a NEF. As shown in FIG. 5, the method can include, but is not limited to, the following steps:

In step 501, a request message sent by an application function (AF) is received, and the request message carries XRM service information.

In step 502, core network mapping information corresponding to the XRM service information is determined.

Specific implementations of steps 501 to 502 in the present disclosure can be found in the detailed description of any of embodiments in the present disclosure, and will not be described in detail herein.

In step 503, a first request sent by a network element device is received, and the first request includes an XRM service event trigger.

The network element device can include at least one of: an AF, an PCF, an SMF, and an AMF.

The first request can be a subscription request sent by the network element device to the NEF for subscribing to the XRM service event trigger. The XRM service event trigger may be an XRM service or multi-modal data related event trigger, such as triggers of Service QoS update, UE relocation, PCF change, etc.

It should be noted that step 503 may be performed after step 502, or may be performed in synchronization with step 502 or step 501, or may be performed before step 501, which is not limited in the present disclosure.

In step 504, in response to the XRM service event trigger being triggered, information corresponding to the XRM service event trigger is reported to the network element device.

Alternatively, after receiving the request message sent by the AF, the NEF can trigger the XRM service event trigger according to the XRM service information and corresponding subscription information.

Or, the XRM service event trigger may be triggered when it is determined that a Qos characteristic parameter or a routing corresponding to any terminal associated with the XRM service group identification is changed.

In the present disclosure, the NEF can receive an XRM service-related event trigger subscribed by a network element device (a consumer), and report relevant information to the consumer when the subscribed event trigger is triggered, so that the consumer can perform a coordination policy based on the obtained XRM service information.

In the present disclosure, after receiving the XRM service information sent by the AF, the NEF can perform information mapping, and after receiving the first request sent by the network element device, relevant information can be sent to the network element device when it is determined that the event trigger is triggered,. Therefore, the coordination of access and mobility related requirements among the plurality of terminals associated with the XRM service group is achieved, and the coordination of the QoS and the transmission policy of XRM service data traffic is thus ensured.

Referring to FIG. 6, FIG. 6 is a flow chart of a method for processing an extended reality multimedia (XRM) service according to an embodiment of the present disclosure, the method being performed by an application function (AF). As shown in FIG. 6, the method can include, but is not limited to, the following steps.

In step 601, a request message is sent to a network exposure function (NEF), and the request message carries XRM service information.

Alternatively, the AF may send the request message to the NEF by triggering NNEF_XRM Service Parameter service.

Alternatively, the XRM service information includes at least one of: an XRM service identification, an XRM service group identification, or a specific parameter of the XRM service provided by the AF to a terminal associated with the XRM service.

The XRM service identification can be any identification information which can uniquely determine an XRM service. The XRM service group identification may be configured to identify each terminal associated with the XRM service.

Alternatively, the AF provides a specific parameter for the terminal associated with the XRM service, and can provide a specific parameter of a multi-modal data service corresponding to the XRM service, which is not limited in the present disclosure.

Alternatively, the terminals associated with the XRM service may be one or more, and the specific parameter of the XRM service or the multi-modal data service provided by the AF for the one or more terminals may include at least one of: a service description, a service parameter, a terminal identification, a terminal group identification, and a subscription to event.

The service description can be configured to identify an XRM service or an XRM data Service.

It can be identified by a combination of a DNN and S-NSSAI, or by an XRM identification (ID); or, it is represented by an AF service identification or an external application identification.

The service parameter is information about an AF guideline determined by a policy and QoS that associate with an XRM service or a multi-modal data service, such as a list of rules that associate with an XRM service or multiple data services application traffic, parameters such as a terminal policy, a Group ID, a combination of a DNN and S-NSSAI, or a selection priority of a corresponding rule, e.g., an alternative QoS parameter priority, a corresponding location or time window priority, or a routing selection priority, etc.

The subscription to event is a notification about an outcome of an SM policy that the AF may subscribe to (the AF may subscribe to notification about the outcome of the SM policy), or an implementation and a change of an AM policy or a UE Policy.

Alternatively, subscription data of a plurality of terminals associated with the XRM service may be associated via the XRM service identification. Data of a plurality of terminals in an XRM service group is consistent. For example, service QoS of the plurality of terminals are consistent, and characteristic parameters of access and data routing of the plurality of terminals are consistent.

Alternatively, the AF may trigger generation and sending the request message after receiving a request of a terminal associated with the XRM service, or, may automatically trigger and send the request message according to a protocol agreement, which is not limited in the present disclosure.

In the present disclosure, by sending the XRM service information to the NEF, the AF enables the NEF to update the UDR information or send the XRM service information to the PCF according to needs. Therefore, the coordination of access and mobility related requirements among the plurality of terminals associated with an XRM service group is achieved, and the coordination of the QoS and the transmission policy of XRM service data traffic is thus ensured.

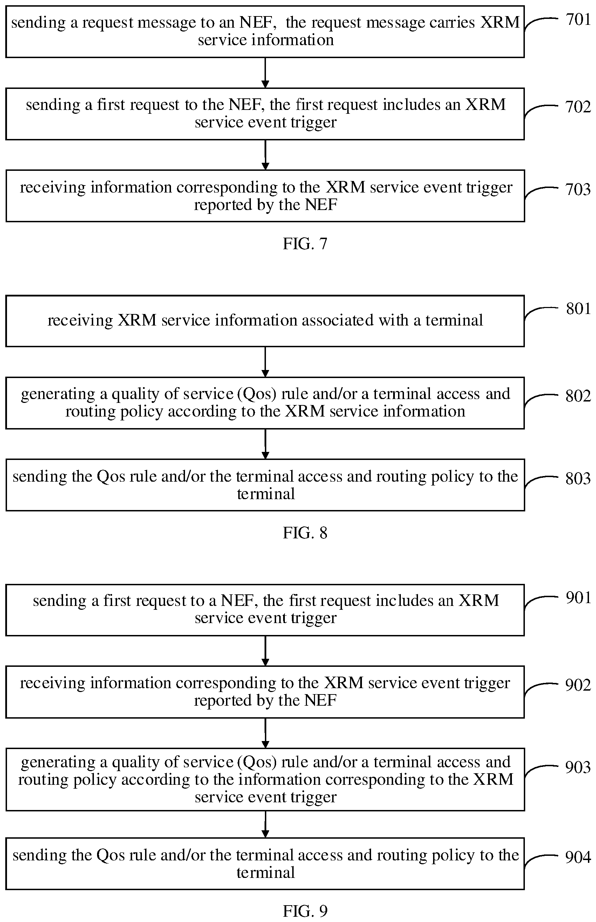

Referring to FIG. 7, FIG. 7 is a flow chart of a method for processing an extended reality multimedia (XRM) service according to an embodiment of the present disclosure, the method being performed by an AF. As shown in FIG. 7, the method can include, but is not limited to, the following steps.

In step 701, a request message is sent to the NEF, and the request message carries XRM service information.

The specific implementation of step 701 described above can be referenced to the detailed description of any embodiment of the present disclosure, and will not be described in detail herein.

Alternatively, when the AF needs to update or delete the corresponding request, the process of updating and deleting the AF request can also be initiated by triggering the NNEF_XRM Service Parameter service.

In step 702, a first request is sent to the NEF, and the first request includes an XRM service event trigger.

In the present disclosure, the AF may send the first request to the NEF to subscribe to the required XRM service event trigger by triggering NNEF_XRM Service Parameter service.

The XRM service event trigger can be an XRM service or multimodal data related event trigger, such as triggers of Service QoS update, UE relocation, PCF change, etc.

It should be noted that step 702 may be performed after step 701, or may be performed in synchronization with step 701, or may be performed before step 701, which is not limited in the present disclosure.

In step 703, information corresponding to the XRM service event trigger reported by the NEF is received.

Alternatively, the AF may acquire corresponding status information by receiving the NEF report. Then subsequent coordination of the QoS rule or the policy of terminal access and routing is executed. For example, in a XRM service or multi-modal data group, if a QoS characteristic parameter of a first terminal changes or routing traffic changes, an Event report is triggered to the NEF and reported to the corresponding other terminals in XRM service or multi-modal data Group, or other application traffic-associated PCFs or SMFs of the same terminal, so that the PCF or SMF performs corresponding session update or network function (NF) reselection.

Alternatively, the UDR is a network-wide data center, after determining the characteristic parameter of the XRM service, the NEF can store the parameter in the UDR, so that the AF can subscribe to the XRM service event trigger from the UDR. For example, a second request is sent to the UDR, and the second request includes the XRM service event trigger, and then information corresponding to the XRM service event trigger reported by the UDR is received.

In the present disclosure, the AF sends the XRM service information to the NEF, and subscribes to the XRM service-related event trigger from the NEF to acquire information corresponding to the XRM service event trigger sent by the NEF when the XRM service-related event trigger is triggered. Therefore, the coordination of access and mobility related requirements among the plurality of terminals associated with the XRM service group is achieved, and the coordination of the QoS and the transmission policy of XRM service data traffic is thus ensured.

Referring to FIG. 8, FIG. 8 is another flow chart of a method for processing an extended reality multimedia (XRM) service according to an embodiment of the present disclosure, the method being performed by a PCF. As shown in FIG. 8, the method can include, but is not limited to, the following steps.

In step 801, XRM service information associated with a terminal is received.

Alternatively, the PCF may receive the XRM service information sent by an NEF, or can acquire the XRM service information reported by a UDR, which is not limited in the present disclosure.

Alternatively, the PCF is a PCF related to an AM associated with the terminal, i.e., a PCF for providing a decision-making service for access management of the terminal.

Alternatively, the XRM service information includes at least one of: an XRM service identification, an XRM service group identification, or a specific parameter of the XRM service or a multi-modal data service provided by an AF to a terminal associated with the XRM service.

The XRM service identification can be any identification information which can uniquely determine an XRM service. The XRM service group identification may be configured to identify each terminal associated with the XRM service.

Alternatively, the AF provides a specific parameter provided for the terminal associated with the XRM service, and can provide a specific parameter of a multi-modal data service corresponding to the XRM service, which is not limited in the present disclosure.

Alternatively, the terminals associated with the XRM service may be one or more, and the specific parameter of the XRM service or the multi-modal data service provided by the AF for the one or more terminals may include at least one of: a service description, a service parameter, a terminal identification, a terminal group identification, and a subscription to event.

The service description can be configured to identify an XRM service or an XRM data Service.

It can be identified by a combination of a DNN and S-NSSAI, or by an XRM identification (ID); or, it is represented by an AF service identification or an external application identification.

The service parameter is information about an AF guideline determined by a policy and QoS that associate with an XRM service or a multi-modal data service, such as a list of rules that associate with an XRM service or multiple data services application traffic, parameters such as a terminal policy, a Group ID, a combination of a DNN and S-NSSAI, or a selection priority of a corresponding rule, e.g., an alternative QoS parameter priority, a corresponding location or time window priority, or a routing selection priority, etc.

The subscription to event is a notification about an outcome of an SM policy that the AF may subscribe to (the AF may subscribe to notification about the outcome of the SM policy), or an implementation and a change of an AM policy or a UE Policy.

Alternatively, subscription data of a plurality of terminals associated with the XRM service may be associated via the XRM service identification. Data of the plurality of terminals in an XRM service group is consistent. For example, service QoS of the plurality of terminals are consistent, and characteristic parameters of access and data routing of the plurality of terminals are consistent.

In step 802, a Qos rule and/or a terminal access and routing policy is generated according to the XRM service information.

In step 803, the Qos rule and/or the terminal access and routing policy is sent to the terminal.

In the present disclosure, after acquiring the XRM service information, the PCF can execute corresponding authorization, and decision-making and updating of the measurement and the rule according to the XRM service information, and the PCF can send the newly generated Qos rule and the terminal access and routing policy to the terminal. Then the terminal can perform access and communication transmission based on the newly received Qos rule and the terminal access and routing policy. Since the Qos rule and the terminal access and routing policy received by each terminal supporting the XRM service are all generated by the corresponding PCF based on the XRM service information, the coordination of access and movement among the terminals is achieved.

Alternatively, if the AF subscribes to an execution result notification of the XRM service-related policy, the PCF may send an execution result to the AF via the NEF upon determining that the AF subscribes to the execution result notification of the XRM service-related policy.

In the present disclosure, after acquiring the XRM service information, the PCF can execute corresponding authorization, and decision-making and updating of the measurement and the rule according to the XRM service information, and the PCF can send the newly generated Qos rule and/or terminal access and routing policy to the terminal. Therefore, the coordination of the Qos rule and/or terminal access and routing policy among the terminals associated with the XRM service can be achieved, and the coordination of the QoS and the transmission policy of XRM service data traffic is thus ensured.

Referring to FIG. 9, FIG. 9 is another flow chart of a method for processing an extended reality multimedia (XRM) service according to an embodiment of the present disclosure, the method being performed by a PCF. As shown in FIG. 9, the method can include, but is not limited to, the following steps.

In step 901, a first request is sent to an NEF, in which the first request includes an XRM service event trigger.

The XRM service event trigger can be an XRM service or multimodal data related event trigger, such as triggers of service QoS update, UE relocation, PCF change, etc.

In the present disclosure, an AF can send XRM service information to the NEF, thus the NEF can determine a characteristic parameter of the XRM service according to the XRM service information and corresponding subscription information, and the PCF can subscribe to the XRF service event trigger from the NEF to acquire the XRM service information.

In step 902, information corresponding to the XRM service event trigger reported by the NEF is received.

In step 903, a Qos rule and/or a terminal access and routing policy is generated according to the XRM service information.

In step 904, the Qos rule and/or the terminal access and routing policy is sent to the terminal.

The specific implementation of steps 901 to 904 described above can be referenced to the detailed description of any embodiment of the present disclosure, and will not be described in detail herein.

In the present disclosure, the PCF can acquire the XRM service information by subscribing to the XRF service event trigger from the NEF, and then can execute corresponding authorization, and decision-making and updating of the measurement and the rule according to the XRM service information, and the PCF can send the newly generated Qos rule and/or terminal access and routing policy to the terminal. Therefore, the coordination of the Qos rule and/or terminal access and routing policy among the terminals associated with the XRM service can be achieved, and the coordination of the QoS and transmission policy of XRM service data traffic is thus ensured.

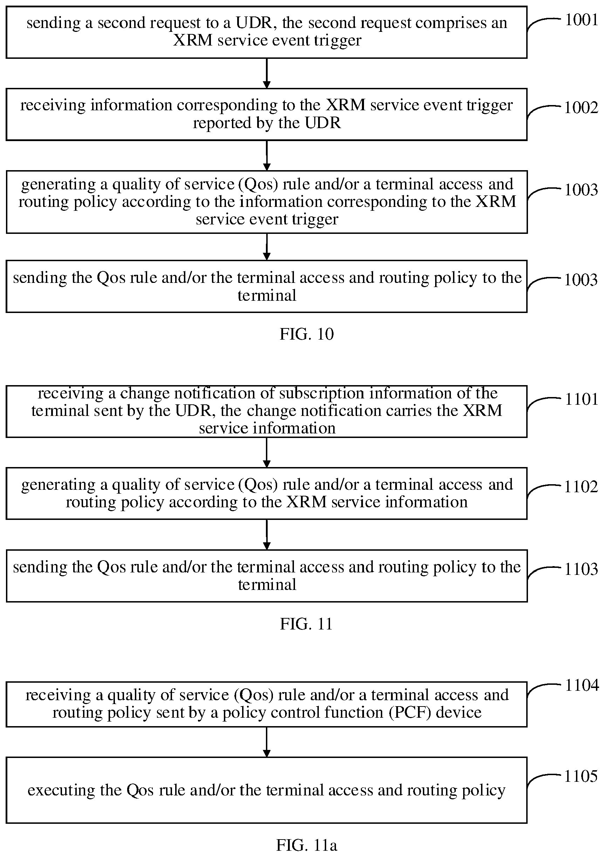

Referring to FIG. 10, FIG. 10 is another flow chart of a method for processing an extended reality multimedia (XRM) service according to an embodiment of the present disclosure, the method being performed by a PCF. As shown in FIG. 10, the method can include, but is not limited to, the following steps.

In step 1001, a second request is sent to a UDR, and the second request includes an XRM service event trigger.

In the present disclosure, the UDR is a network-wide data center, thus, after determining a characteristic parameter of the XRM service, an NEF can store the parameter in the UDR, so that the PCF can subscribe to the XRM service event trigger from the UDR to acquire the XRM service information.

In step 1002, information corresponding to the XRM service event trigger reported by the UDR is received.

In step 1003, a Qos rule and/or a terminal access and routing policy is generated according to the information corresponding to the XRM service event trigger.

In step 1004, the Qos rule and/or the terminal access and routing policy is sent to the terminal. The specific implementation of steps 1001 to 1004 described above can be referenced to the detailed description of any embodiment of the present disclosure, and will not be described in detail herein.

In the present disclosure, the PCF can acquire the XRM service information by subscribing to the XRF service event trigger from the UDR, and then can execute corresponding authorization, and decision-making and updating of the measurement and the rule according to the XRM service information, and the PCF can send the newly generated Qos rule and/or terminal access and routing policy to the terminal. Therefore, the coordination of the Qos rule and/or the terminal access and routing policy among the terminals associated with the XRM service can be achieved, and the coordination of the QoS and transmission policy of XRM service data traffic is thus ensured.

Referring to FIG. 11, FIG. 11 is another flow chart of a method for processing an extended reality multimedia (XRM) service according to an embodiment of the present disclosure, the method being performed by a PCF. As shown in FIG. 11, the method can include, but is not limited to, the following steps.

In step 1101, a change notification of subscription information of a terminal sent by a unified data repository (UDR) is received, and the change notification carries the XRM service information.

Alternatively, in the present disclosure, after an NEF determines a characteristic parameter corresponding to the XRM service according to a request message sent by an AF and stores the corresponding characteristic parameter to the UDR, the UDR can determine the change of the subscription information of the terminal, and thus the PCF can receive the change notification of subscription information of the terminal sent by the UDR.

In step 1102, a Qos rule and/or a terminal access and routing policy is generated according to the information corresponding to the XRM service event trigger.

In step 1103, the Qos rule and/or the terminal access and routing policy is sent to the terminal.

Alternatively, after determining the terminal-side Qos rule and/or terminal access and routing policy, the PCF can send the relevant policy to the terminal, so that the terminal can communicate based on the acquired Qos rule and/or the terminal access and routing policy.

Alternatively, in response to a change of the subscription information corresponding to the terminal, a changed parameter is stored to the UDR.

Meanwhile, if the AF subscribes to an execution result notification of the XRM service-related policy, the PCF may send an execution result to the AF via the NEF upon determining that the AF subscribes to the execution result notification of the XRM service-related policy.

The specific implementation of steps 1101 to 1103 described above can be referenced to the detailed description of any embodiment of the present disclosure, and will not be described in detail herein.

In the present disclosure, when receiving the change notification of subscription information sent by the UDR, the PCF can execute corresponding authorization, and decision-making and updating of the measurement and the rule according to the XRM service information, and the PCF can send the newly generated Qos rule and/or terminal access and routing policy to the terminal. Therefore, the coordination of the Qos rule and/or terminal access and routing policy among the terminals associated with the XRM service can be achieved, and the coordination of the QoS and transmission policy of XRM service data traffic is thus ensured.

Now referring to FIG. 11a, FIG. 11a is a flow chart of a method for processing an extended reality multimedia (XRM) service according to an embodiment of the present disclosure. As shown in FIG. 11a, the method can include, but is not limited to, the following steps.

In step 1104, a quality of service (Qos) rule and/or a terminal access and routing policy sent by a policy control function (PCF) is received.

The Qos rule and/or the terminal access and routing policy is generated by the PCF based on XRM service information.

In step 1105, the Qos rule and/or the terminal access and routing policy is executed.

In the present disclosure, the PCF associated with an AM session, selected by the terminal when the terminal registers to the network, determines the Qos rule and/or the terminal access and routing policy based on the XRM service information, i.e., the Qos rule and/or the terminal access and routing policy may be sent to the terminal. Thereafter, the terminal may perform access and communication transmission based on the newly received Qos rule and the terminal access and routing policy. Since the Qos rule and the terminal access and routing policy received by each terminal supporting the XRM service are all generated by the corresponding PCF based on the XRM service information, the coordination of access and movement among the terminals is achieved.

In the present disclosure, after receiving the Qos rule and/or the terminal access and routing policy generated based on the XRM service information, the terminal can perform access and communication transmission based on the Qos rule and/or the terminal access and routing policy. Therefore, the coordination of the Qos rule and/or the terminal access and routing policy among the terminals associated with the XRM service can be achieved, and the coordination of the QoS and transmission policy of XRM service data traffic is thus ensured.

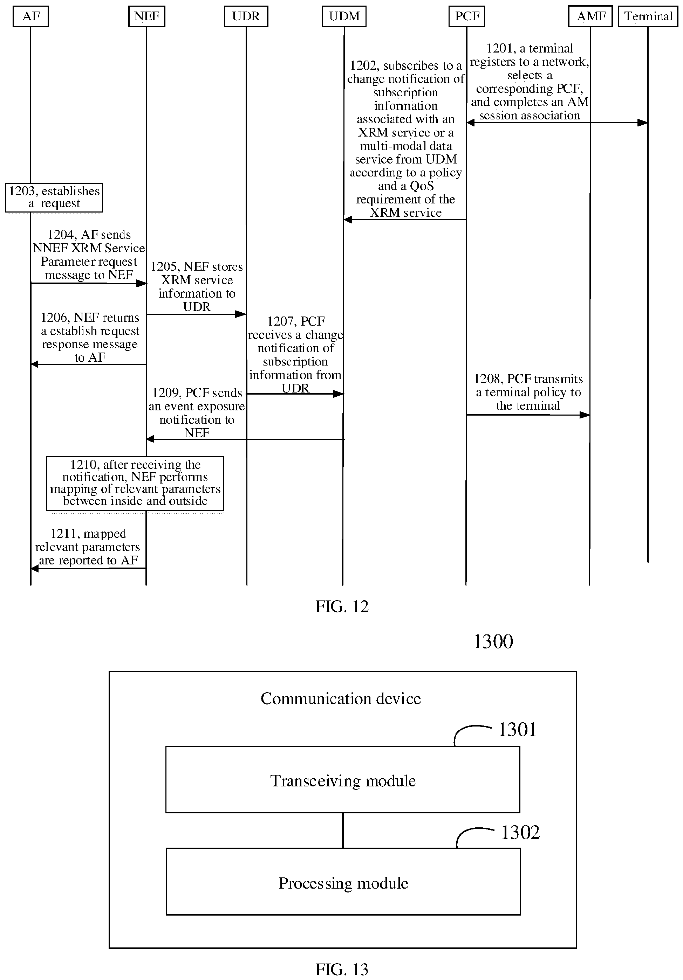

Now referring to FIG. 12, FIG. 12 is an interactive schematic diagram of a method for processing an extended reality multimedia (XRM) service according to an embodiment of the present disclosure. As shown in FIG. 12, the method can include, but is not limited to, the following steps.

In step 1201, a terminal registers to a network, selects a corresponding PCF, and completes an AM session association.

The terminal may be one or more terminals associated with an XRM service or a multi-modal data service, or a plurality of terminals. It can be understood that a plurality of terminals can select corresponding PCFs respectively.

In step 1202, the PCF subscribes to a change notification of subscription information associated with an XRM service or a multi-modal data service from a UDM according to a policy and a QoS requirement of the XRM service.

It should be noted that the above-mentioned steps 1201 and 1202 may not necessarily have a strict sequence with the following steps, i.e., the above-mentioned steps 1201 and 1202 may be performed before the following steps, may be performed in parallel with the following steps, or may be performed after the following steps, which is not limited in the present disclosure.

In step 1203, an AF establishes a request, and the request includes an XRM service identification and/or an XRM service group identification.

In step 1204, the AF sends a NNEF XRM Service Parameter request message to an NEF.

Alternatively, the AF may send a NNEF XRM Service Parameter update message to the NEF, or the AF may send a NNEF XRM Service Parameter delete message to the NEF.

In step 1205, the NEF stores XRM service information to a UDR.

Alternatively, the NEF may update the XRM service information in the UDR or remove the XRM service information from the UDR.

In step 1206, the NEF returns a establish request response message to the AF.

In step 1207, the PCF receives a change notification of subscription information from the UDR.

In step 1208, the PCF transmits a terminal policy to the terminal.

In step 1209, the PCF sends an event exposure notification to the NEF.

Alternatively, the PCF may send the notification, such as a Npcf event exposure notify, to the NEF via a service interface Npcf provided by the PCF.

In step 1210, after receiving the notification, the NEF performs a mapping of relevant parameters between inside and outside.

In step 1211, the mapped relevant parameters are reported to the AF.

The specific implementation of the above-mentioned steps 1201-1211 can be referred to the detailed description of any embodiment of the present disclosure, and will not be described in detail herein.

In the present disclosure, through the above-mentioned interaction of XRM information, the coordination of access and mobility related requirements among a plurality of terminals corresponding to an XRM service group is achieved, and the coordination of the QoS and transmission policy of XRM service data traffic is thus ensured.

Referring to FIG. 13, a block diagram of a communication device 1300 provided according to an embodiment of the present disclosure. The communication device 1300 shown in FIG. 13 may include a transceiving module 1301 and a processing module 1302. The transceiving module 1301 may include a sending module and/or a receiving module. The sending module is configured to realize a sending function, the receiving module is configured to realize a receiving function, and the transceiving module 1301 may realize the sending function and/or the receiving function.

It is understood that the communication device 1300 may be a network exposure function (NEF), a device in the NEF, or a device capable of being used in in conjunction with the NEF.

The communication device 1300 is on the NEF side, in which
the transceiving module 1301 is configured to receive a request message sent by an application function (AF), in which the request message carries XRM service information; and
the processing module 1302 is configured to update information of an XRM in a unified data repository (UDR) according to subscription information corresponding to the XRM service information and the XRM service information.

Alternatively, the XRM service information includes at least one of:
an XRM service identification; and
an XRM service group identification; or
a specific parameter of the XRM service provided by the AF to a terminal associated with the XRM service.

Alternatively, the XRM service group identification may be configured to identify each terminal associated with the XRM service.

Alternatively, the specific parameter includes at least one of:
a service description, a service parameter, a terminal identification, a terminal group identification, or a subscription to event.

Alternatively, the processing module 1302 is further configured to:
determine core network mapping information corresponding to the XRM service information.

Alternatively, the processing module 1302 is specifically configured to:
determine a data network name (DNN) and network slice selection assistance information (S-NSSAI) corresponding to the XRM service identification or a multi-modal data service identification;
determine a core network (CN) application identification corresponding to an external application identification, in which the external application identification is configured to identify the XRM service;
determining a terminal identification in a CN corresponding to the terminal identification according to subscription information corresponding to the XRM service; and
determine an XRM service group identification in a CN corresponding to the XRM service group identification according to subscription information corresponding to the XRM service.

Alternatively, the NEF can acquire the subscription information corresponding to the XRM service from a UDM.

Alternatively, the processing module 1302 is further configured to:
determine a characteristic parameter corresponding to the XRM service.

Alternatively, the processing module 1302 is further configured to store the characteristic parameter corresponding to the XRM service in a unified data repository (UDR); and/or,
the transceiving module 1301 is further configured to send the characteristic parameter corresponding to the XRM service to a policy control function (PCF).

Alternatively, the XRM service is associated with a plurality of terminals, and the transceiving module 1301 is further configured to:
send the characteristic parameter to the PCF corresponding to each of the plurality of terminals.

Alternatively, subscription data of the plurality of terminals is associated via an XRM service identification and/or an XRM service group identification.

Alternatively, the transceiving module 1301 is further configured to:
receive a first request sent by a network element device, in which the first request includes an XRM service event trigger; and
in response to the XRM service event trigger being triggered, report information corresponding to the XRM service event trigger to the network element device, in which the network element device includes at least one of: an AF, a PCF, an SMF, and an AMF.

In the present disclosure, after receiving the XRM service information sent by the AF, the NEF may update the information of the XRM in the UDR according to the service information and the subscription information corresponding to the XRM service information, for execution by a PCF or a RAN. Therefore, the coordination of access and mobility related requirements among a plurality of terminals corresponding to an XRM service group is achieved, and the coordination of the QoS and transmission policy of XRM service data traffic is thus ensured.

It will be understand that the communication device 1300 can also be an application function (AF), an apparatus in an application function AF, or an apparatus that can be used in conjunction with the AF.

The communication device 1300 is on the application function AF side, in which:
a transceiving module 1301 is configured to send a request message to a network exposure function (NEF), in which the request message carries XRM service information.

Alternatively, the XRM service information includes at least one of:
an XRM service identification; and
an XRM service group identification; or
a specific parameter of the XRM service provided by the AF to a terminal associated with the XRM service.

Alternatively, the XRM service group identification may be configured to identify each terminal associated with the XRM service.

Alternatively, the specific parameter includes at least one of:
a service description, a service parameter, a terminal identification, a terminal group identification, or a subscription to event.

Alternatively, the transceiving module 1301 is further configured to:
send a first request to the NEF, in which the first request includes an XRM service event trigger; and
receive information corresponding to the XRM service event trigger reported by the NEF.

Alternatively, the transceiving module 1301 is further configured to:
send a second request to a UDR, in which the second request includes an XRM service event trigger; and
receive information corresponding to the XRM service event trigger reported by the UDR.

In the present disclosure, by sending the XRM service information to the NEF, the AF enables the NEF to update the UDR information or send the XRM service information to the PCF according to needs. Therefore, the coordination of access and mobility related requirements among a plurality of terminals associated with an XRM service group is achieved, and the coordination of the QoS and transmission policy of XRM service data traffic is thus ensured.

It will be understood that the communication device 1300 may be a policy control function (PCF), may be an apparatus in a policy control function PCF, or may be an apparatus that can be used in conjunction with the PCF.

The transceiving module 1301 is configured to receive XRM service information associated with a terminal.

The processing module 1302 is configured to execute, according to the XRM service information, coordination of a quality of service Qos rule and/or a terminal access and routing policy.

Alternatively, the transceiving module 1301 is further configured to:
send a first request to the an NEF, in which the first request includes an XRM service event trigger; and
receive information corresponding to the XRM service event trigger reported by the NEF.

Alternatively, the transceiving module 1301 is further configured to:
send a second request to a UDR, in which the second request includes an XRM service event trigger; and
receive information corresponding to the XRM service event trigger reported by the UDR.

Alternatively, the transceiving module 1301 is specifically configured to:
receive a change notification of subscription information of the terminal sent by a unified data repository (UDR), in which the change notification carries the XRM service information.

Alternatively, the transceiving module 1301 is further configured to:
send a terminal policy to the terminal.

Alternatively, the processing module 1302 is further configured to:
in response to a change of the subscription information corresponding to the terminal, store a changed parameter to the UDR.

Alternatively, the transceiving module 1301 is further configured to:
in response to an application function AF requesting execution result notification of an an XRM service-related policy, send an execution result to the AF via an NEF.

In the present disclosure, after acquiring the XRM service information, the PCF can execute corresponding authorization, and decision-making and updating of the measurement and the rule according to the information, and the PCF can send the newly generated Qos rule and/or terminal access and routing policy to the terminal. Therefore, the coordination of the Qos rule and/or terminal access and routing policy among the terminals associated with the XRM service can be achieved, and the coordination of the QoS and transmission policy of XRM service data traffic is thus ensured.

It will be understood that the communication device 1300 can also be a terminal, an apparatus in a terminal, or an apparatus that can be used in conjunction with a terminal.

The communication device 1300 is in the terminal, in which
the transceiving module is configured to receive a Qos rule and/or a terminal access and routing policy sent by a policy control function (PCF).
the processing module is configured to execute the Qos rule and/or the terminal access and routing policy.

In the present disclosure, after receiving the Qos rule and/or the terminal access and routing policy generated based on XRM service information, the terminal can perform access and communication transmission based on the Qos rule and/or the terminal access and routing policy. Therefore, the coordination of the Qos rule and/or terminal access and routing policy among the terminals associated with the XRM service can be achieved, and the coordination of the QoS and transmission policy of XRM service data traffic is thus ensured.

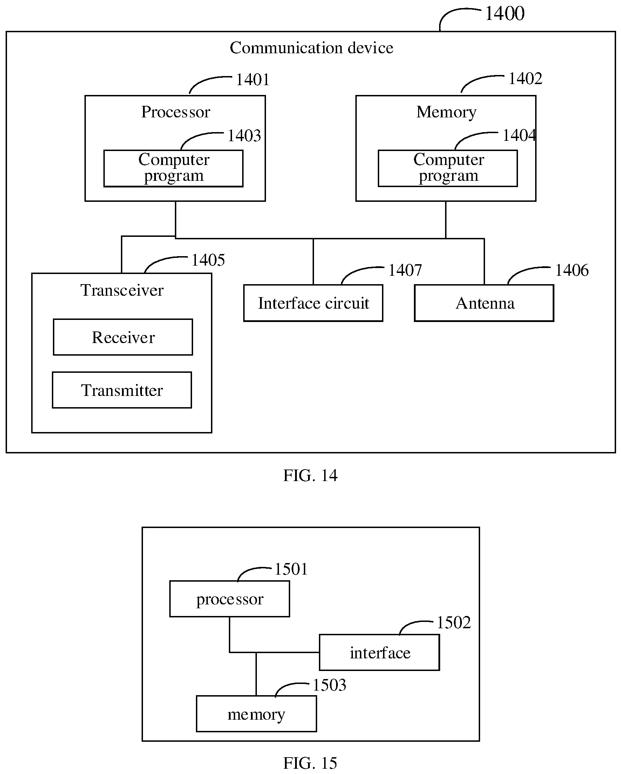

Referring to FIG. 14, FIG. 14 is a block diagram of another communication device 1400 provided according to an embodiment of the present disclosure. The communication device 1400 can be a network exposure function (NEF), an application function (AF), a policy control function (PCF), a terminal, a chip, a chip system or a processor supporting the network exposure function (NEF) to implement the above-mentioned method, a chip, a chip system or a processor supporting the application function (AF) to implement the above-mentioned method, and a chip, a chip system or a processor supporting the policy control function (PCF) to implement the above-mentioned method. The communication device can be configured to carry out the method described in the above method embodiments, see in particular the description of the above method embodiments.

The communication device 1400 may include one or more processors 1401. The processor 1401 may be a general-purpose processor or a special purpose processor, etc. It may be, for example, a baseband processor or a central processor. The baseband processor can be configured to process a communication protocol and communication data, and the central processor can be configured to control a communication device (such as a base station, a baseband chip, a terminal, a terminal chip, a DU or a CU, etc.), execute a computer program and process data of the computer program.

Alternatively, the communication device 1400 may also include one or more memories 1402 having a computer program 1404 stored thereon. The computer program 1404 is executed by the processor 1401 to cause the communication device 1400 to execute the methods described in the above method embodiments. Alternatively, the memory 1402 may also have data stored therein. The communication device 1400 and the memory 1402 may be provided separately or integrated together.

Alternatively, the communication device 1400 may also include a transceiver 1405 and an antenna 1406. The transceiver 1405 may be referred to as a transceiving unit, a transceiver, or a transceiving circuit, etc. for performing transceiving functions. The transceiver 1405 may include a receiver and a transmitter, and the receiver may be referred to as a receiver machine or a receiving circuit, etc., for realizing a receiving function; the transmitter may be referred to as a transmitter machine or a transmission circuit or the like for performing a transmission function.

Alternatively, one or more interface circuits 1407 may also be included in the communication device 1400. The interface circuit 1407 is configured to receive code instructions and send them to the processor 1401. The processor 1401 executes the code instructions to cause the communication device 1400 to execute the method described in the above method embodiments.

The communication device 1400 is a network exposure function NEF. The transceiver 1405 is configured to execute step 201 in FIG. 2; step 301 in FIG. 3; step 401 and step 404 in FIG. 4; step 501, step 503, step 504, etc. in FIG. 5. The processor 1401 is configured to execute step 202 in FIG. 2; step 302, step 303 and step 304 in FIG. 3; step 402, step 403 in FIG. 4; step 502 in FIG. 5, etc.

The communication device 1400 is the application function AF. The transceiver 1405 is configured to execute step 601 in FIG. 6; step 701, step 702, step 703, etc. in FIG. 7.

The communication device 1400 is a policy control function PCF. The transceiver 1405 is configured to execute step 801 and step 803 in FIG. 8; step 901, step 902 and step 904 in FIG. 9; step 1001, step 1002 and step 1004 in FIG. 10; step 1101, step 1103, etc. in FIG. 11. The processor 1401 is configured to execute step 802 in FIG. 8; step 903 in FIG. 9; step 1003 in FIG. 10; step 1102 in FIG. 11, etc.

The communication device 1400 is a terminal. The transceiver 1405 is configured to perform step 1104 etc. in FIG. 11a. The processor 1401 is configured to perform step 1105 etc. in FIG. 11a.

In one implementation, a transceiver for implementing receiving and sending functions may be included in the processor 1401. For example, the transceiver may be a transceiving circuit, an interface, or an interface circuit. The transceiver circuit, interface, or interface circuit for implementing the receiving and transmitting functions may be separate or integrated. The transceiver circuit, interface or interface circuit may be configured to read and write code/data, or the transceiver circuit, interface or interface circuit may be configured to transmit or transfer signals.

In one implementation, the processor 1401 may store a computer program 1403 that, when runs on the processor 1401, causes the communication device 1400 to execute the methods described in the above method embodiments. The computer program 1403 may be solidified in the processor 1401, in which case the processor 1401 may be implemented in hardware.

In one implementation, the communication device 1400 may include circuitry that may perform the functions of transmitting or receiving or communication in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated using various IC process technologies such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiment description may be a network device or an access network device such as a terminal in the aforementioned method embodiments, but the scope of the communication device described in the present disclosure is not limited thereto, and the structure of the communication device may not be limited by FIG. 14. The communication device may be an individual device or may be part of a larger device. For example, the communication device may be:
(1) a stand-alone integrated circuit IC, a chip, a chip system or a subsystem;
(2) a set of ICs including one or more ICs, alternatively, the set of ICs may also include storage components for storing data and computer programs;
(3) an ASIC, such as a Modem;
(4) modules that can be embedded in other devices;
(5) a receiver, a terminal, an intelligent terminal, a cellular phone, a wireless device, a handset, a mobile unit, an on-board device, a network device, a cloud device, an artificial intelligence device, etc.; and
(6) others.

For the case where the communication device may be a chip or a system of chips, reference can be made to the schematic structural diagram of the chip shown in FIG. 15. The chip shown in FIG. 15 includes a processor 1501 and an interface 1502. The number of processors 1501 may be one or more and the number of interfaces 1502 may be more than one.

For the case where the chip is configured to realize the function of the network exposure function NEF in embodiments of the present disclosure:
the interface 1502 is configured to execute step 201 in FIG. 2; step 301 in FIG. 3; step 401 and step 404 in FIG. 4; step 501, step 503, step 504, etc. in FIG. 5.

For the case where the chip is configured to implement the function of the application function AF in embodiments of the present disclosure:
the interface 1502 is configured to execute step 601 in FIG. 6; step 701, step 702, step 703, etc. in FIG. 7.

For the case where the chip is configured to implement the function of the policy control function PCF in embodiments of the present disclosure:
the interface 1502 is configured to execute step 801 and step 803 in FIG. 8; step 901, step 902 and step 904 in FIG. 9; step 1001, step 1002 and step 1004 in FIG. 10; step 1101, step 1103, etc. in FIG. 11.

For the case where the chip is configured to realize the function of the terminal in embodiments of the present disclosure:
the interface 1502 is configured to execute step 1104 in FIG. 11a, etc.

Alternatively, the chip further includes a memory 1503 for storing necessary computer programs and data.

A person skilled in the art would further appreciate that the various illustrative logical blocks and steps described in connection with embodiments of the present disclosure may be implemented as electronic hardware, computer software, or combinations of both. Whether such functionality is implemented as hardware or software depends upon the particular application and design requirements of the overall system. A person skilled in the art may implement the described functionality in varying ways for each particular application, but such implementation should not be interpreted as causing a departure from the scope of embodiments of the present disclosure.

Embodiments of the present disclosure also provide a system for processing an extended reality multimedia XRM service, the system including the communication device serving as a network exposure function NEF and the communication device serving as an application function AF or the communication device serving as a policy control function PCF in the aforementioned embodiment of FIG. 13, or the system including the communication device serving as a network exposure function NEF and the communication device serving as an application function AF and the communication device serving as a policy control function PCF in the aforementioned embodiment of FIG. 14.

The present disclosure also provides a readable storage medium having stored thereon instructions which, when executed by a computer, implement the functions of any of the method embodiments described above.

The present disclosure also provides a computer program product which, when executed by a computer, performs the functions of any of the method embodiments described above.

The embodiments described above may be implemented in whole or in part by software, hardware, firmware, or any combination thereof. When implemented in software, it may be implemented in whole or in part as a computer program product. The computer program product includes one or more computer programs. The computer programs, when loaded and executed on a computer, implement, in whole or in part, the processes or functions according to embodiments of the present disclosure. The computer may be a general-purpose computer, a special purpose computer, a computer network, or other programmable apparatus. The computer program may be stored in a computer-readable storage medium or sent from one computer-readable storage medium to another computer-readable storage medium. For example, the computer program may be sent from one website, computer, server, or data center to another website, computer, server, or data center by wire (e.g., coaxial cable, fiber optic, digital subscriber line (DSL)) or wirelessly (e.g., infrared, wireless wave, microwave, etc.). The computer-readable storage medium can be any available medium that can be accessed by a computer or a data storage device, such as a server integrated with one or more available media, a data center, etc. The available medium may be a magnetic medium (e.g., floppy disk, hard disk, magnetic tape), an optical medium (e.g., digital video disc (DVD)), or a semiconductor medium (e.g., solid state disk (SSD)), etc.

It is understood that in the present disclosure, "a plurality of......" means two or more, and that other quantifiers are similar. "And/or......", describing an associated relationship between associated objects, indicates that three relationships may exist. For example, A and/or B, may indicate that: there are three cases of A alone, A and B together, and B alone. The character "/" generally indicates that the associated objects are in an "or" relationship. The singular forms "a", "an", and "the" are intended to include the plural forms as well, unless the context clearly indicates other meanings otherwise.

It is to be further understood that while operations are depicted in the accompanying drawings in a particular order, embodiments of the present disclosure should not be construed as requiring that such operations be performed in the particular order shown or in a serial order, or that all illustrated operations be performed, to achieve desired results. In certain circumstances, multitasking and parallel processing may be advantageous.

A person skilled in the art will appreciate that the various numerical designations of the first, second, etc. referred to in the present disclosure are merely for convenience of description and are not intended to limit the scope of embodiments of the present disclosure, and do not represent a sequential order.

The "at least one of......" in the present disclosure may also be described as one or more, and the plurality may be two, three, four, or more, to which the present disclosure. In embodiments of the present disclosure, for one type of technical feature, the technical features in the one type of technical feature are distinguished by "first", "second", "third", "A", "B", "C" and "D", etc. and there is no order of precedence or order of magnitude among the technical features described by the "first", "second", "third", "A", "B", "C" and "D".

The correspondence shown in the tables in the present disclosure may be configured or predefined. The values of the information in the tables are merely examples, and other values may be configured, to which the present disclosure is not limited. When configuring the correspondence between the information and each parameter, it is not necessarily required that all the correspondences shown in each table must be configured. For example, the correspondence shown in certain rows in the tables in the present disclosure may not be configured. As another example, appropriate deformation adjustments may be made based on the above table, e.g., split, merge, etc. The names of the parameters indicated by the headings in the above tables may also be other names understood by the communication device, and the values or expressions of the parameters may also be other values or expressions understood by the communication device. The above-mentioned tables can also be implemented using other data structures, for example, an array, a queue, a container, a stack, a linear table, a pointer, a linked list, a tree, a graph, a structural body, a class, a heap, a hashed list or a hash table can be used.

Predefinition in the present disclosure can be understood as being defined, predefined, stored, pre-stored, pre-negotiated, pre-configured, cured, or pre-fired.

A person skilled in the art would recognize that the various illustrative elements and algorithm steps described in connection with embodiments of the present disclosure may be implemented as electronic hardware, or combinations of computer software and electronic hardware. Whether such functionality is implemented as hardware or software depends upon the particular application and design constraints imposed. A person skilled in the art may implement the described functionality in varying ways for each particular application, but such implementation should not be interpreted as causing a departure from the scope of the present disclosure.

It will be clear to a person skilled in the art that, for the convenience and brevity of the description, specific working procedures of the above-described systems, apparatuses and units may be referred to corresponding procedures in the preceding method embodiments, and will not be described in detail here.

Other embodiments of the present disclosure will be apparent to a person skilled in the art from consideration of the description and practice of the present disclosure disclosed herein. The present disclosure is intended to cover any variations, uses, or adaptations of the present disclosure following, in general, the principles of the present disclosure and including such departures from the present disclosure as come within known or customary practice in the art to which the present disclosure pertains. It is intended that the description and examples be considered as exemplary only, with a true scope and spirit of the present disclosure being indicated by the following claims.

While the foregoing is directed to embodiments of the present disclosure, other and further embodiments of the present disclosure may be devised without departing from the basic scope thereof, and the scope thereof is determined by the claims that follow. Accordingly, the protection sought in the present disclosure is as set forth in the claims below.

## Claims

1. A method for processing an extended reality multimedia (XRM) service, wherein the method is performed by a network exposure function (NEF), the method comprising:
receiving a request message sent by an application function (AF), wherein the request message carries XRM service information; and
updating information of an XRM in a unified data repository (UDR) according to subscription information corresponding to the XRM service information and the XRM service information.

2. The method according to claim 1, wherein the XRM service information comprises at least one of:
an XRM service identification;
an XRM service group identification; or
a specific parameter of the XRM service provided by the AF to a terminal associated with the XRM service.

3. The method according to claim 2, wherein the XRM service group identification is configured to identify each terminal associated with the XRM service.

4. The method according to claim 2, wherein the specific parameter comprises at least one of:
a service description, a service parameter, a terminal identification, a terminal group identification, or a subscription to event.

5. The method according to claim 3, further comprising:
determining core network mapping information corresponding to the XRM service information.

6. The method according to claim 5, wherein determining the core network mapping information corresponding to the XRM service information comprises at least one of:
determining a data network name (DNN) and network slice selection assistance information (S-NSSAI) corresponding to the XRM service identification;
determining a core network (CN) application identification corresponding to an external application identification, wherein the external application identification is configured to identify the XRM service;
determining a terminal identification in a CN corresponding to the terminal identification according to subscription information corresponding to the XRM service; or
determining an XRM service group identification in a CN corresponding to the XRM service group identification according to subscription information corresponding to the XRM service.

7. The method according to claim 1, further comprising:
determining a characteristic parameter corresponding to the XRM service.

8. The method according to claim 7, further comprising:
storing the characteristic parameter corresponding to the XRM service to a UDR; and/or,
sending the characteristic parameter corresponding to the XRM service to a policy control function (PCF).

9. The method according to claim 8, wherein the XRM service is associated with a plurality of terminals, the method further comprising:
sending the characteristic parameter to the PCF corresponding to each of the plurality of terminals.

10. The method according to claim 9, wherein
subscription data of the plurality of terminals is associated via an XRM service identification and/or an XRM service group identification.

11. The method according to any one of claims 1-10, further comprising:
receiving a first request sent by a network element device, wherein the first request comprises an XRM service event trigger; and
in response to the XRM service event trigger being triggered, reporting information corresponding to the XRM service event trigger to the network element device, wherein the network element device comprises at least one of: the AF, a PCF, a session management function (SMF), or an access and mobility management function (AMF).

12. A method for processing an extended reality multimedia service (XRM), wherein the method is performed by an application function (AF), the method comprising:
sending a request message to a network exposure function (NEF), wherein the request message carries XRM service information.

13. The method according to claim 12, wherein the XRM service information comprises at least one of:
an XRM service identification;
an XRM service group identification; or
a specific parameter of the XRM service provided by the AF to a terminal associated with the XRM service.

14. The method according to claim 13, wherein the XRM service group identification is configured to identify each terminal associated with the XRM service.

15. The method according to claim 13, wherein the specific parameter comprises at least one of:
a service description, a service parameter, a terminal identification, a terminal group identification, or a subscription to event.

16. The method according to claim 12, further comprising:
sending a first request to the NEF, wherein the first request comprises an XRM service event trigger; and
receiving information corresponding to the XRM service event trigger reported by the NEF.

17. The method according to claim 12, further comprising:
sending a second request to a unified data repository (UDR), wherein the second request comprises an XRM service event trigger;
receiving information corresponding to the XRM service event trigger reported by the UDR.

18. A method for processing an extended reality multimedia service (XRM), wherein the method is performed by a policy control function (PCF) device, the method comprising:
receiving XRM service information associated with a terminal;
generating a quality of service (Qos) rule and/or a terminal access and routing policy according to the XRM service information; and
sending the Qos rule and/or the terminal access and routing policy to the terminal.

19. The method according to claim 18, further comprising:
sending a first request to a network exposure function (NEF), wherein the first request comprises an XRM service event trigger; and
receiving information corresponding to the XRM service event trigger reported by the NEF.

20. The method according to claim 18, further comprising:
sending a second request to a unified data repository (UDR), wherein the second request comprises an XRM service event trigger; and
receiving information corresponding to the XRM service event trigger reported by the UDR.

21. The method according to claim 20, wherein receiving the XRM service information associated with the terminal comprises:
receiving a change notification of subscription information of the terminal sent by the UDR, wherein the change notification carries the XRM service information.

22. The method according to claim 21, further comprising:
in response to a change of the subscription information corresponding to the terminal, storing a changed parameter to the UDR.

23. The method according to claim 18, further comprising:
in response to an application function (AF) requesting an execution result notification of an XRM service-related policy, sending an execution result to the AF via an NEF.

24. A method for processing an extended reality multimedia service (XRM), wherein the method is executed by a terminal, the method comprising:
receiving a quality of service (Qos) rule and/or a terminal access and routing policy sent by a policy control function (PCF) device, wherein the Qos rule and/or the terminal access and routing policy is generated based on XRM service information; and
executing the Qos rule and/or the terminal access and routing policy.

25. A communication device, wherein the communication device is configured at a network exposure function (NEF) side, the communication device comprising:
a transceiving module, configured to receive a request message sent by an application function (AF), wherein the request message carries XRM service information; and
a processing module, configured to update information of an XRM in a unified data repository (UDR) according to subscription information corresponding to the XRM service information and the XRM service information.

26. The communication device according to claim 25, wherein the XRM service information comprises at least one of:
an XRM service identification;
an XRM service group identification; or
a specific parameter of the XRM service provided by the AF to a terminal associated with the XRM service.

27. The communication device according to claim 26, wherein the XRM service group identification is configured to identify each terminal associated with the XRM service.

28. The communication device according to claim 26, wherein the specific parameter comprises at least one of:
a service description, a service parameter, a terminal identification, a terminal group identification, or a subscription to event.

29. The communication device according to claim 27, wherein the processing module is further configured to:
determine core network mapping information corresponding to the XRM service information.

30. The communication device according to claim 29, wherein the processing module is specifically configured to:
determine a data network name (DNN) and network slice selection assistance information (S-NSSAI) corresponding to the XRM service identification;
determine a core network (CN) application identification corresponding to an external application identification, wherein the external application identification is configured to identify the XRM service;
determine a terminal identification in a CN corresponding to the terminal identification according to subscription information corresponding to the XRM service; or
determine an XRM service group identification in a CN corresponding to the XRM service group identification according to subscription information corresponding to the XRM service.

31. The communication device according to claim 25, wherein the processing module is further configured to:
determine a characteristic parameter corresponding to the XRM service.

32. The communication device according to claim 31, wherein
the processing module is further configured to store the characteristic parameter corresponding to the XRM service to a UDR; and/or,
the transceiving module is further configured to send the characteristic parameter corresponding to the XRM service to a policy control function (PCF) device.

33. The communication device according to claim 32, wherein the XRM service is associated with a plurality of terminals, and wherein the transceiving module is further configured to:
send the characteristic parameter to the PCF device corresponding to each of the plurality of terminals.

34. The communication device according to claim 33, wherein
subscription data of the plurality of terminals is associated via an XRM service identification and/or an XRM service group identification.

35. The communication device according to any one of claims 25-34, wherein the transceiving module is further configured to:
receive a first request sent by a network element device, wherein the first request comprises an XRM service event trigger; and
in response to the XRM service event trigger being triggered, report information corresponding to the XRM service event trigger to the network element device, wherein the network element device comprises at least one of: the AF, a PCF, a session management function (SMF), and an access or mobility management function (AMF).

36. A communication device, wherein the communication device is configured at an application function (AF) side, the communication device comprising:
a transceiving module, configured to send a request message to a network exposure function (NEF), wherein the request message carries XRM service information.

37. The communication device according to claim 36, wherein the XRM service information comprises at least one of:
an XRM service identification;
an XRM service group identification; or
a specific parameter of the XRM service provided by the AF provides to a terminal associated with the XRM service.

38. The communication device according to claim 37, wherein the XRM service group identification is configured to identify each terminal associated with the XRM service.

39. The communication device according to claim 37, wherein the specific parameter comprises at least one of:
a service description, a service parameter, a terminal identification, a terminal group identification, or a subscription to event.

40. The communication device according to claim 36, wherein the transceiving module is further configured to:
send a first request to the NEF, wherein the first request comprises an XRM service event trigger; and
receive information corresponding to the XRM service event trigger reported by the NEF.

41. The communication device according to claim 36, wherein the transceiving module is further configured to:
send a second request to a unified data repository (UDR), wherein the second request comprises an XRM service event trigger;
receive information corresponding to the XRM service event trigger reported by the UDR.

42. A communication device, wherein the communication device is configured at a policy control function (PCF) device side, the communication device comprising:
a transceiving module, configured to receive XRM service information associated with a terminal; and
a processing module, configured to generate a quality of service (Qos) rule and/or a terminal access and routing policy according to the XRM service information;
wherein the transceiving module is further configured to send the Qos rule and/or the terminal access and routing policy to the terminal.

43. The communication device according to claim 42, wherein the transceiving module is further configured to:
send a first request to a network exposure function (NEF), wherein the first request comprises an XRM service event trigger; and
receive information corresponding to the XRM service event trigger reported by the NEF.

44. The communication device according to claim 42, wherein the transceiving module is further configured to:
send a second request to a unified data repository (UDR), wherein the second request comprises an XRM service event trigger; and
receive information corresponding to the XRM service event trigger reported by the UDR.

45. The communication device according to claim 44, wherein the transceiving module is specifically configured to:
receive a change notification of subscription information of the terminal sent by the UDR, wherein the change notification carries the XRM service information.

46. The communication device according to claim 42, wherein the processing module is further configured to:
in response to a change of the subscription information corresponding to the terminal, store a changed parameter to the UDR.

47. The communication device according to any one of claims 42-46, wherein the transceiving module is further configured to:
in response to an application function (AF) requesting an execution result notification of an XRM service-related policy, send an execution result to the AF via an NEF.

48. A communication device, wherein the communication device is configured in a terminal, the communication device comprising:
a transceiving module, configured to receive a quality of service (Qos) rule and/or a terminal access and routing policy sent by a policy control function (PCF) device, wherein the Qos rule and/or the terminal access and routing policy is generated based on XRM service information; and
a processing module, configured to execute the Qos rule and/or the terminal access and routing policy.

49. A communication device, comprising a processor and a memory, the memory having stored therein a computer program, wherein the processor executes the computer program stored in the memory to cause the communication device to execute the method according to any one of claims 1 to 12, or the method according to any one of claims 13 to 17, or the method according to any one of claims 18 to 23, or the method according to claim 24.

50. A computer-readable storage medium storing instructions, wherein when the instructions are executed, the method according to any one of claims 1 to 12 is implemented, or the method according to any one of claims 13 to 17 is implemented, or the method according to any one of claims 18 to 23 is implemented, or the method according to claim 24 is implemented.
